# EUROPÄISCHE PATENTSCHRIFT

(11) **EP 4 491 015 B1**
(45) Veröffentlichungstag und Bekanntmachung des Hinweises auf die Patenterteilung: **19.08.2026**
(21) Anmeldenummer: 24185997.4
(22) Anmeldetag: 02.07.2024
(51) Int. Cl.: A01K 79/02, E02B 1/00

(54) **RECHENSTAB**
SCREENING ROD
BARRE DE DÉGRILLAGE

(30) Priorität: 12.07.2023 EP 23185008
(43) Veröffentlichungstag der Anmeldung: 15.01.2025
(73) Patentinhaber: Fäh Maschinen- und Anlagenbau AG, 8750 Glarus (CH)
(72) Erfinder: GROB, Hansruedi, 8755 Ennenda (CH); LÜTSCHG, Res, 8753 Mollis (CH)
(74) Vertreter: Pestalozzi, Deborah

(56) Entgegenhaltungen:
- EP-A1- 4 039 087
- WO-A1-2021/099018
- DE-A1- 102020 105 413
- US-B1- 6 347 908

## Beschreibung

### TECHNISCHES GEBIET

Die vorliegende Erfindung betrifft einen Rechenstab für einen Fischleitrechen zum Zurückhalten oder Umleiten von Fischen in einem Wasserkörper.

### STAND DER TECHNIK

Fischleitrechen werden beispielsweise vor Wasserkraftanlagen platziert, einerseits, um Maschinenbestandteile vor Beschädigung durch Geschwemmsel, Treibgut, Steine, Kies etc. zu schützen, und andererseits, um Fische vor Verletzungen oder Verendung in der Wasserkraftanlage zu schützen. Um die Fische optimal zu schützen, sind sehr kleine Abstände zwischen den Rechenstäben nötig. Kleine Abstände führen aber auch zu hydraulischen Verlusten und einem erhöhten Reinigungs- und Unterhaltsaufwand, weshalb ein Kompromiss gefunden werden muss, wenn der Fischleitrechen beide Funktionen übernehmen soll. Im Falle grosser Abstände kann eine Scheuchfunktion durch Beaufschlagung der Rechen mit Strom- und/oder Spannungsimpulsen erreicht werden, wie beispielsweise in der WO 2013/060320 A1 beschrieben. Die DE 10 2020 105 413 A1 offenbart eine Integration von elektrischen Leitern innerhalb der Rechenstäbe. Darin wird vorgeschlagen, beim Nachrüsten bestehender herkömmlicher Fischleitrechen, elektrische Leiter durch ein elektrisch isolierendes Material zu trennen. Hier wird der elektrische Leiter am Kopf oder Schwanz des jeweiligen Rechenstabs befestigt und isoliert. Wie die Befestigung und die Isolation zu realisieren ist, wird hingegen nicht beschrieben.

### DARSTELLUNG DER ERFINDUNG

Die vorliegende Erfindung hat unter anderem die Aufgabe, die Nachteile des Standes der Technik zu überwinden, und einen verbesserten Rechenstab für einen Fischleitrechen bereitzustellen.

Diese Aufgabe wird durch einen Rechenstab nach Anspruch 1 und einen Fischleitrechen nach Anspruch 14 gelöst.

Eine Vielzahl von den erfindungsgemässen Rechenstäben werden zu einem Flussrechen bzw. Fischleitrechen zusammengefügt, und mit Strom beaufschlagt, was zum Aufbau eines elektrischen Felds führt, welches die Fische davon abhält, den Fischleitrechen zu passieren bzw. die Fische zur Umkehr veranlasst oder in einen Bypasskanal umleitet.

Vorzugsweise ist das elektrische Feld entlang der gesamten Länge des Fischleitrechens konstant. Gemäss einer alternativen Ausführungsform kann jedoch das elektrische Feld der Rechenstäbe entlang der Länge des Fischleitrechens in Richtung des Bypasskanals in abnehmender Stärke eingestellt sein. Vorzugsweise nimmt die Stärke des elektrischen Felds in solch einem Fall nur in einem bypasskanalseitigen Abschnitt des Fischleitrechens, vorzugsweise lediglich in denjenigen Rechenstäben, welche im Abstand von maximal einem Meter vom Bypasskanal im Fischleitrechen angeordnet sind, kontinuierlich ab. Vorzugsweise ist in einer insbesondere bevorzugten Ausführungsform im Rechenstab, welcher im Fischleitrechen am nächsten zum Bypasskanal montiert ist, das elektrische Feld auf Null eingestellt, sodass die Fische sich entlang des abnehmenden elektrischen Felds zum Bypasskanal hin bewegen.

Der erfindungsgemässe Rechenstab für einen Fischleitrechen weist einen Grundkörper auf. Dieser erstreckt sich über einen oberwasserseitigen Kopfbereich, einen stromabwärts vom Kopfbereich angeordneten Mittelbereich und einen stromabwärts vom Mittelbereich angeordneten Schwanzbereich. Am oberwasserseitigen Ende des Kopfbereichs des Rechenstabs ist eine Elektrode angeordnet. Die Elektrode weist eine Isolationsschicht auf, welche die Elektrode vom elektrisch leitfähigen metallischen Grundkörper des Rechenstabs elektrisch isoliert. Erfindungsgemäss ist die Elektrode formschlüssig mit dem Grundkörper des Rechenstabs verbunden.

Mit Formschluss ist das Fügen zweier Wirkflächen gemeint. Dabei ist im Rahmen der vorliegenden Erfindung nicht ausgeschlossen, dass zwischen diesen beiden Wirkflächen eine Zwischenschicht, in der vorliegenden Erfindung, die Isolationsschicht, eingepasst ist. Die formschlüssige Verbindung kann beispielsweise durch Verzahnungen, Schwalbenschwänze, Nuten, Zapfen, Kämme, usw. realisiert werden. Vorzugsweise sind ein oder mehrere Bereiche der Elektrode in entsprechenden korrespondierenden Ausnehmungen bzw. Nuten des Grundkörpers aufgenommen, bzw. darin eingerastet oder gefangen, sodass sie nur gegen Aufwendung einer gegen die Einpassungsrichtung Kraft wieder daraus gelöst werden können.

Die formschlüssige Verbindung kann unlösbar, lösbar oder bedingt lösbar ausgebildet sein. Eine lösbare oder bedingt lösbare Ausgestaltung ermöglicht das Nachrüsten und/oder Umrüsten bestehender Konstruktionen von Fischleitrechen.

Durch die formschlüssige Verbindung wird die Befestigung derart verstärkt, sodass die Verbindung zwischen Elektrode und Grundkörper des Rechenstabs den auf die Rechenstäbe einwirkenden Kräften standhalten kann, welche durch die Strömung des Wasserkörpers, sowie durch Belastungen von einer allfälligen Rechenreinigungsmaschine und von Geschwemmsel, wie beispielsweise Steine, Kies, Sand, Baumstämme, Wurzelstöcke Geäst, etc., resultieren.

Eine formschlüssige Verbindung im Sinne der vorliegenden Erfindung kann aufgrund einer ineinander greifenden Form von Grundkörper und Elektrode grundsätzlich ohne zusätzliches mechanisches Befestigungsmaterial auskommen. Die betreffenden, gemäss der vorliegenden Erfindung formschlüssig miteinander verbundenen Elemente, d.h. Grundkörper und Elektrode, sind dabei jeweils derart ausgestaltet, dass sie durch Formschluss, das heisst durch ihre körperliche Ausgestaltung, ohne zusätzliche Befestigung-/Verbindungsmittel während des bestimmungsmässigen Gebrauchs des Rechenstabs, welcher die formschlüssige Verbindung aufweist, in einem Fischleitrechen, miteinander verbunden bleiben würden, ohne dass ihre Verbindung gelöst wird. Dabei würden die Wirkflächen an der Verbindungsfuge zwischen den formschlüssig verbundenen Elementen, d.h. zwischen Grundkörper und Elektrode des Rechenstabs, ihre Verbindung selbst und allein durch die übertragenen Kräfte, welche in der Regel senkrecht zu den Berührungs-/Wirkflächen der formschlüssig verbundenen Elemente entstehen, halten, auch ohne zusätzliche Befestigungs-/Verbindungsmittel. Durch die ineinandergreifende Ausgestaltung von Grundkörper und Elektrode, oder umgekehrt, wäre eine Relativbewegung zwischen dem Grundkörper und der Elektrode, mindestens entlang einer Profilquerschnitt-Längsachse des Rechenstab-Profils, welche senkrecht zur Längsachse des Rechenstabs verläuft, im Wesentlichen gesperrt bzw. verunmöglicht. Als Profil wird hier die Form des Querschnitts des Rechenstabs in Strömungsrichtung beim bestimmungsgemässen Gebrauch des Rechenstabs an einem Fischleitrechen in einem Wässerkörper bezeichnet.

Zusätzliche mechanische Befestigungselemente wie Schrauben, Stifte, Bolzen, Nieten, etc. sind aber zur Verstärkung der Verbindung möglich.

Zusätzlich zur formschlüssigen Verbindung kann der Grundkörper des Rechenstabs mittels einer kraftschlüssigen Verbindung, beispielsweise durch eine Pressverbindung mit der Elektrode verbunden werden. Diese zusätzliche kraftschlüssige Verbindung ist vorzugsweise eine bedingt lösbare Verbindung. Die Ergänzung der formschlüssigen Verbindung durch eine kraftschlüssige Verbindung ist aber nicht zwingend.

Erfindungsgemäss ist der Grundkörper des Rechenstabs, zusätzlich zur formschlüssigen Verbindung, mittels einer stoffschlüssigen Verbindung mit der Elektrode verbunden. Dadurch wird eine Relativbewegung von Grundkörper und Elektrode sogar in allen Richtungen senkrecht zu den Wirkflächen zwischen diesen beiden formschlüssig verbundenen Elementen, d.h. zwischen Grundkörper und Elektrode gesperrt.

Erfindungsgemäss fungiert die Isolationsschicht somit gleich selbst als Befestigungs- bzw. Verbindungsmittel zwischen Grundkörper und Elektrode. Mit anderen Worten stellt die Isolationsschicht erfindungsgemäss selbst eine stoffschlüssige Verbindung bereit, bzw. die stoffschlüssige Verbindung wirkt gleichzeitig als Isolationsschicht.

Dabei ist die Isolationsschicht gleichzeitig ein elektrisch isolierender Klebstoff, bzw. ein Isolationskleber, welcher die Elektrode mindestens bereichsweise stoffschlüssig mit dem Grundkörper des Rechenstabs verbindet. Beispiele für einen solchen isolierenden Klebstoff sind Loctite^{®} EA 9483, Collano^{®} RS 8505, Sikadur-52 Injection Normal, HILTI^{®} HIT-HY 200-R V3, oder Jowat^{®} 690.00.

Der verwendete Klebstoff sollte wasserbeständig sein, vorzugsweise auch UV-beständig und insbesondere bevorzugt auch alterungsbeständig. Unter "beständig" wird im Rahmen der vorliegenden Erfindung ein Zeitrahmen von mind. 5 Jahren, vorzugsweise von mindestens 10 Jahren, insbesondere bevorzugt von mindestens 15 Jahren, und am meisten bevorzugt von mindestens 20 Jahren bei bestimmungsmässigem Gebrauch verstanden.

Der Klebstoff kann vollständig aushärtbar oder elastisch verformbar sein.

Vorzugsweise weist der Klebstoff bzw. die Isolationsschicht eine Dicke im Bereich von 0.5 bis 3 mm auf.

Die Elektrode ist in einer bevorzugten Ausführungsform in Form eines geschlitzten Hohlzylinders ausgebildet, wobei der Hohlzylinder entlang seiner Längsachse über seine gesamte Länge hinweg mindestens eine Ausnehmung aufweist. Die Ausnehmung bzw. der Schlitz entspricht vorzugsweise, an der Mantelfläche des Hohlzylinders gemessen, einem Kreisbogen von maximal 120 Grad, vorzugsweise 60-100 Grad, insbesondere bevorzugt 70-90 Grad. Die maximale Breite der Ausnehmung der Elektrode, gemessen in der Querschnittebene quer zur Profillängsachse und quer zur Längsachse des Rechenstabs beträgt 30-50%, vorzugsweise ca. 42% der Stabbreite.

Vorzugsweise bildet die Elektrode, mindestens bereichsweise und vorzugsweise vollständig, das oberwasserseitige Ende des Kopfbereichs des Rechenstabs. Dies kann beispielsweise durch Einfügen oder Aufpfropfen der Elektrode auf den Grundkörper, oder durch Überstülpen bzw. Umhüllen des Grundkörpers im Kopfbereich des Rechenstabs erreicht werden.

Die Elektrode ist vorzugsweise im Kopfbereich des Rechenstabs formschlüssig an mindestens einem Fortsatz des Grundkörpers befestigt, vorzugsweise an mindestens einem oberwasserseitigen oder peripheren Fortsatz des Grundkörpers.

Die formschlüssige Befestigung zwischen Elektrode und Fortsatz des Grundkörpers kann, wie oben erwähnt, nebst der formschlüssigen und stoffschlüssigen Verbindung zusätzlich durch mechanische Befestigungsmittel verstärkt werden, beispielsweise durch Schrauben oder Stifte. In einer bevorzugten Ausführungsform umschliesst die Elektrode den mindestens einen Fortsatz mindestens bereichsweise, bzw. schmiegt sich mindestens bereichsweise an den Fortsatz an. Die zusätzliche Befestigung kann aber auch durch eine Pressverbindung erfolgen.

Die Befestigung zwischen Elektrode und Grundkörper erfolgt erfindungsgemäss indirekt über die Isolationsschicht. Das heisst, die Isolationsschicht ist im Kopfbereich des Rechenstabs zwischen der Elektrode und dem Grundkörper angeordnet.

Die Isolationsschicht ist formschlüssig in Nuten bzw. Ausnehmungen, Aussparungen oder Kerben des Grundkörpers eingepasst, und erstreckt sich vorzugsweise entlang sämtlicher einander zugewandter Grenzflächen der jeweilig formschlüssig verbundenen Elemente, und die Elektrode bzw. die Elektrodenschicht passt sich dann wiederum formschlüssig an die Peripherie der Isolationsschicht an. Der Fortsatz weist somit vorteilhafterweise korrespondierende Elemente auf, welche sich für eine formschlüssige Verbindung eignen. Die Elektrode, und vorzugsweise auch die zwischen Grundkörper und Elektrode aufgetragene bzw. montierte Isolationsschicht weist vorzugsweise ebenfalls ein oder mehrere Elemente auf, welche sich für einen formschlüssigen Eingriff eignen, wie beispielsweise Zapfen, Keile, Schwalbenschwänze, Rippen, Zähne, etc. Projektionen der Elektrode, und vorzugsweise auch der Isolationsschicht, greifen somit in korrespondierende Ausnehmungen des Grundkörpers ein, wobei auch eine umgekehrte Anordnung möglich ist. Ist die Isolationsschicht zumindest beim Auftragen aus einem weichen Material ausgebildet, so kann sich dieses an die Unterlage am Grundkörper anpassen und sich in Nuten des Fortsatzes einfügen und allenfalls darin aushärten.

Die Isolationsschicht kann gemäss einer weiteren Ausführungsform mittels mindestens eines zusätzlichen mechanischen Befestigungsmittels auf der Grenzfläche des Grundkörpers des Rechenstabs zur Elektrode hin, und/oder auf der Grenzfläche der Elektrode zum Grundkörper hin.

Eine bevorzugte Ausführungsform weist eine Elektrode mit einer Ausnehmung auf, welche via diese Ausnehmung über einen oberwasserseitigen Fortsatz des Grundkörpers des Rechenstabs übergestülpt ist. Die Ausnehmung der Elektrode hat, gemessen in der Querschnittsebene des Rechenstabs quer zur Längsachse des Rechenstabs und quer zur Profillängsachse des Rechenstabs, eine Breite, welche kleiner ist als ein maximaler Durchmesser des Fortsatzes des Grundkörpers. Somit kann die Elektrode in einer Richtung entgegen der Hauptströmungsrichtung des Wasserkörpers, in welcher der Rechenstab installiert wird oder ist, nicht ohne Kraftaufwand oder Demontage vom Grundkörper gelöst werden. Das Aufschieben der Elektrode auf den Fortsatz des Grundkörpers des Rechenstabs erfolgt vorzugsweise in einer Richtung entlang der Längsachse des Rechenstabs.

Im Kopfbereich des Rechenstabs weist der Grundkörper des Rechenstabs vorzugsweise eine erste Dicke auf, welche, falls der Kopfbereich des Grundkörpers eine sich verjüngende Querschnittsform aufweist, einer maximalen ersten Dicke entspricht. Der Mittelbereich weist eine zweite Dicke auf, welche kleiner ist als die erste Dicke bzw. die maximale erste Dicke des Grundkörpers im Kopfbereich. Der Schwanzbereich des Grundkörpers weist vorzugsweise in Richtung des unterwasserseitigen Endes des Rechenstabs eine Verjüngung auf, welche mit einer maximalen Dicke, welche der zweiten Dicke des Mittelbereichs entspricht, beginnt und bis auf eine minimale Dicke reduziert wird. Die Dicke des Grundkörpers ist hier also über die Länge des Schwanzbereichs hinweg variabel. Es ist auch möglich, dass der Mittelteil nicht eine konstante Dicke aufweist, sondern ebenfalls bereits mit einer Verjüngung ausgebildet ist.

Vorzugsweise ist der Grundkörper des Rechenstabs aus einem gewalzten Stahlprofil gebildet, insbesondere bevorzugt aus Baustahl oder rostfreiem Stahl, vorzugsweise aus Stahl S355.

Gemäss einer weiteren bevorzugten Ausführungsform ist der erfindungsgemässe Rechenstab frostsicher aufgebaut, indem die Elektrode zudem auch zur Beheizung des Rechenstabs verwendet werden kann, bzw. indem der Rechenstab über die Elektrode aufheizbar ausgebildet ist.

Vorteilhafterweise weist die Elektrode einen Aussendurchmesser auf, welcher mindestens der maximalen Stabdicke im Kopfbereich des Rechenstabs entspricht. Die Elektrode bildet somit vorzugsweise das oberwasserseitige Ende des Rechenstabs.

Der Rechenstab weist vorzugsweise in einem Querschnitt eine Profilform auf, welche ausgewählt ist aus fischbauchförmig, stromlinienförmig, oder tränenförmig. Es sind auch andere Profil-Querschnittsformen des Rechenstabs möglich, wie beispielsweise rechteckig, schwertförmig, hantelförmig, etc.

Es ist ferner bevorzugt, wenn die Elektrode steuerbar, ggf. fernsteuerbar ausgebildet ist, sodass die Elektrode nach Bedarf selektiv ein- und ausgeschaltet werden kann. So wäre es beispielsweise möglich, die Elektrifizierung nur zeitweilig zu realisieren, z.B. nur zur Hauptmigrationszeit gewisser Fische, wie beispielsweise Aale.

Die vorliegende Erfindung betrifft zudem einen Fischleitrechen mit einer Vielzahl von Rechenstäben gemäss einer der oben beschriebenen Ausführungsformen. Wie oben erwähnt, sind vorzugsweise in einem bypasskanalseitigen Abschnitt des Fischleitrechens die Rechenstäbe jeweils derart mit einem elektrischen Feld beaufschlagt, dass das elektrische Feld der im bypasskanalseitigen Abschnitt angeordneten Rechenstäbe zum Bypasskanal hin kontinuierlich abnehmend eingestellt ist.

Durch die erfindungsgemässen Rechenstäbe ist es möglich, bestehende Fischleitrechen, welche ursprünglich ohne Elektroden in einem Wasserlauf montiert wurden, nachzurüsten. Dazu kann beispielsweise ein isolierender Klebstoff auf den Kopfbereich jedes einzelnen Rechenstabs aufgetragen werden, gefolgt von einer Montage der Elektrode auf formschlüssige Weise auf die durch den isolierenden Klebstoff ausgebildete Isolationsschicht. Auch Pressverbindungen zusätzlich zu stoffschlüssigen Verbindungen, oder zusätzliche mechanische Befestigungsmittel erlauben eine einfache Nachrüstung.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht eines Bypass-Systems mit einem Fischleitrechen gemäss einem ersten Ausführungsbeispiel der vorliegenden Erfindung;
- Fig. 2: einen vergrösserten Ausschnitt des Bereichs A von Figur 1;
- Fig. 3: eine perspektivische Ansicht eines Ausschnittes des Fischleitrechens von Fig. 1;
- Fig. 4: einen schematischen Querschnitt durch ein Profil eines Rechenstabs des Fischleitrechens von Fig. 1 gemäss einer ersten bevorzugten Ausführungsform der Erfindung.
- Fig. 5a-f: schematische Querschnitte von Rechenstab-Profilen gemäss weiteren bevorzugten Ausführungsformen.

### BESCHREIBUNG BEVORZUGTER AUSFÜHRUNGSFORMEN

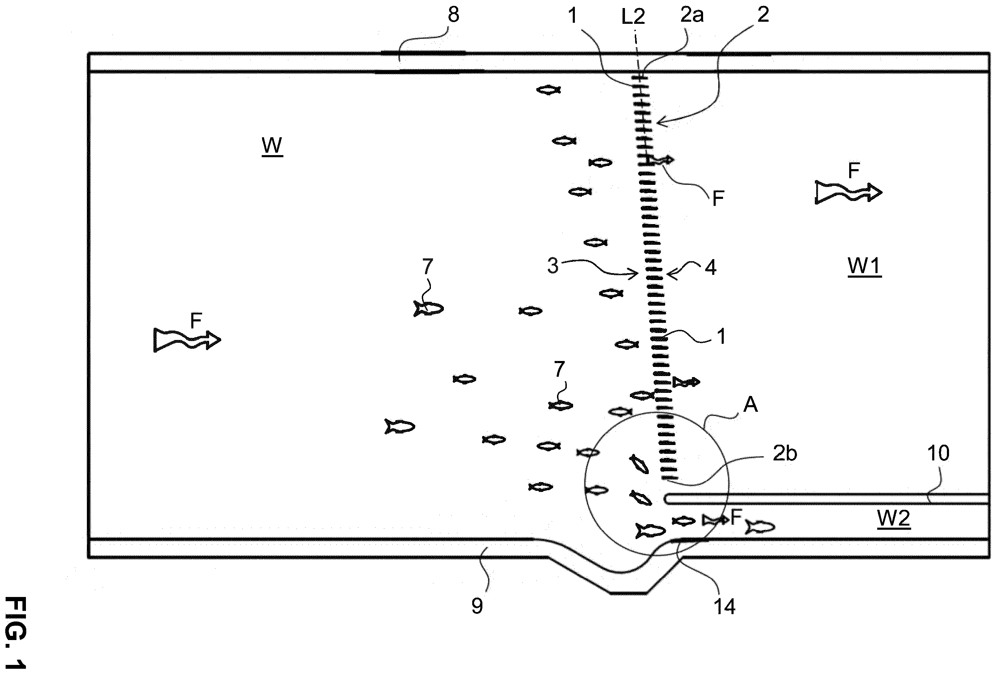

In Figur 1 ist eine Draufsicht auf einen Wasserkörper W eines Fliessgewässers mit einem Umleitungs-/Bypass-System dargestellt. Die Ansicht ist entlang der Höhe und quer zur Längsachse L2 des Fischleitrechens 2 bzw. parallel zur Längsachse L1 der einzelnen Rechenstäbe 1 quer zur Wasseroberfläche und quer zur Hauptstromrichtung F des Fliessgewässers. Stromabwärts des Fischleitrechens 2 ist der Wasserkörper W zweigeteilt in einen ersten Bereich W1, welcher einem Triebwasserkanal entspricht, und einen zweiten Bereich W2, welcher dem Bypasskanal entspricht. Um zu verhindern, dass Fische 7 via den Triebwasserkanal W1 zu einem Kraftwerk (nicht dargestellt) gelangen, sollen diese entweder zur Umkehr bewegt, oder in den Bypasskanal W2 umgeleitet werden, um so ins Unterwasser zu gelangen.

Der Wasserkanal W ist begrenzt durch eine erste Grenzstruktur 8 und eine zweite Grenzstruktur 9, welche im Wesentlichen parallel zur Hauptströmungsrichtung F entlang einer ersten bzw. zweiten vertikalen Ebene E1, E2 erstrecken. Zwischen der ersten Grenzstruktur 8 und der zweiten Grenzstruktur 9 ist eine dritte, mittlere Grenzstruktur 10 in einem Abschnitt des Wasserkanals W angeordnet, welcher in der Hauptströmungsrichtung F stromabwärts vom Fischleitrechen 2 angeordnet ist. Die dritte, mittlere Grenzstruktur 10 ist im Wesentlichen parallel zur ersten Grenzstruktur 8 und zur zweiten Grenzstruktur 9 angeordnet, wobei der Triebwasserkanal W1 in einer Richtung quer zur Hauptströmungsrichtung F von der ersten Grenzstruktur 8 und der dritten, mittleren Grenzstruktur 10 begrenzt ist, und wobei der Bypasskanal W2 in einer Richtung quer zur Hauptströmungsrichtung F von der zweiten Grenzstruktur 9 und der dritten, mittleren Grenzstruktur 10 begrenzt ist.

Der Fischleitrechen 2 erstreckt sich mit seiner Länge L2 über einen Abschnitt des Wasserkanals W, von der ersten Grenzstruktur 8 bis zur dritten, mittleren Grenzstruktur 10. Ein erstes, triebwasserkanalseitiges Ende 2a des Fischleitrechens ist somit an bzw. in unmittelbarer Nähe der ersten Grenzstruktur 8 befestigt, und ein zweites, bypasskanalseitiges Ende 2b des Fischleitrechens 2 ist an bzw. in unmittelbarer Nähe der dritten, mittleren Grenzstruktur 10 befestigt. Die Fische 7, welche am Fischleitrechen 2 ankommen, werden vom Triebwasserkanal W1 weg und in Richtung des Bypasskanals W2 geleitet.

Die zweite Grenzstruktur 9 weist am Eingang zum Bypasskanal W2 ein Schwenktor 14 auf, mittels welchem der Bypasskanal W2 bei Hochwasser geschlossen werden kann. Das Schwenktor 14 verhindert die Verstopfung, welche bei Hochwasser aufgrund von Geschwemmsel, welches den Bypasskanal verstopft, auftreten kann. Die Abflussmenge durch den Bypasskanal soll ideal für den Fischabstieg sein, aber auch nicht zu gross, weil das Wasser grundsätzlich für die Stromerzeugung im Triebwasserkanal genutzt werden soll.

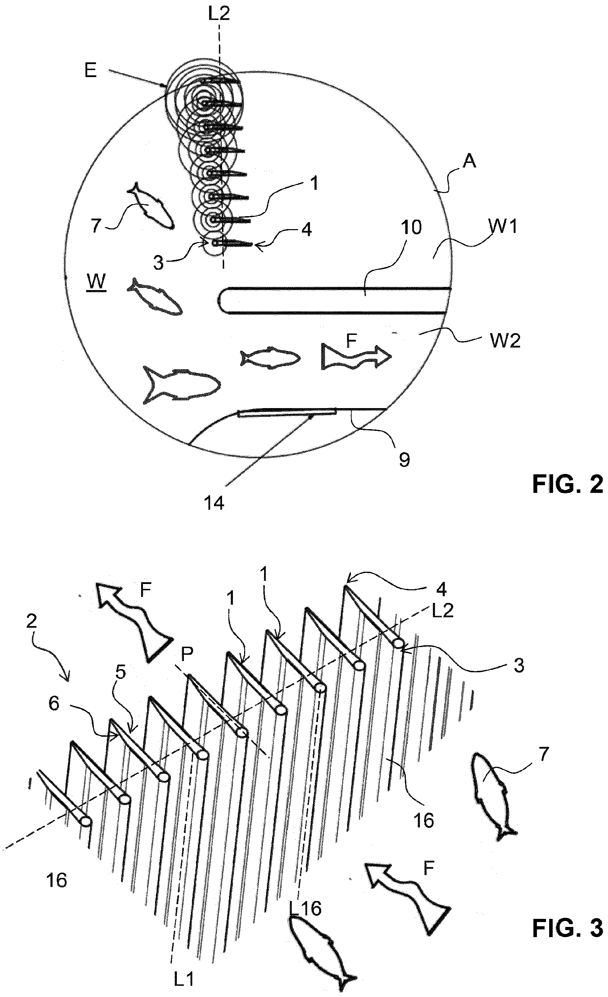

In der Detailansicht von Figur 2 sind diejenigen acht Rechenstäbe 1, welche dem Bypasskanal W2 am nächsten angeordnet sind, in vergrösserter Ansicht dargestellt. In der dargestellten Figur 2 ist das betreffende elektrische Feld E, welches von jedem der Rechenstäbe 1 an dessen oberwasserseitigem Ende ausgeht, dargestellt, wobei im dargestellten Ausführungsbeispiel das elektrische Feld E in Richtung des Bypasskanals W2 abnehmend dargestellt ist. Das heisst, dass derjenige Rechenstab 1, welcher im Triebwasserkanal W1 dem Bypasskanal W2 am nächsten angeordnet ist, das kleinste elektrische Feld E des gleichen betreffenden Fischleitrechens 2 aufweist, und somit ein kleineres elektrisches Feld E aufweist, als der ihm in Richtung der zweiten Grenzstruktur 9 benachbarte Rechenstab 1, welcher weiter weg vom Bypasskanal W2 angeordnet ist.

In Figur 3 ist eine perspektivische Ansicht eines Abschnittes eines erfindungsgemässen Fischleitrechens 2 dargestellt, mit einer Vielzahl von parallel zueinander angeordneten Rechenstäben 1. Die Rechenstäbe 1 haben jeweils eine Längsachse L1, sowie eine Profillängsachse P bzw. Querschnittslängsachse quer zu ihrer Längsachse L1 in der Querschnittebene S. Dabei ist eine Vielzahl von Rechenstäben 1 mit vorzugsweise kontanten Abständen zueinander an einem (nicht dargestellten) Rechenrahmen befestigt oder angeformt, und so zu einem Fischleitrechen 2 zusammengefügt. Die Länge l1 eines Rechenstabs 1 ist nicht begrenzt, bzw. kann der Tiefe des Wasserkörpers W angepasst werden.

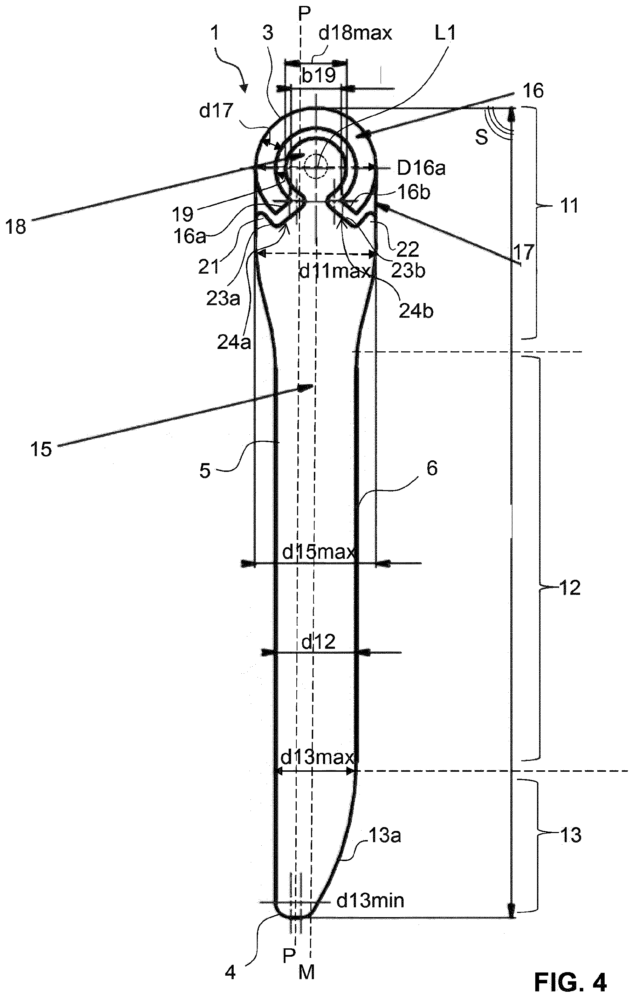

Der Rechenstab 1 weist, wie in Figur 4 schematisch als Querschnitt des Profils dargestellt, ein erstes, oberstromiges bzw. oberwasserseitiges Ende 3 auf, sowie stromabwärts vom ersten Ende 3 ein zweites, unterstromiges bzw. unterwasserseitiges Ende 4.

Vom ersten Ende 3 zum zweiten Ende 4 hin, d.h. in der Hauptstromrichtung bzw. Fliessrichtung F des Wasserkörpers Wweist der Rechenstab 1 zunächst einen Kopfbereich 11 auf, welcher in Richtung der Profillängsachse P in einen mittleren Bereich 12 mit einer Dicke d12 übergeht, welcher wiederum in einen Schwanzbereich 13 übergeht.

Im dargestellten Ausführungsbeispiel weist der Kopfbereich 11 eine maximale Dicke d11max auf, welche sich verjüngt zu einer in diesem Ausführungsbeispiel konstanten Dicke d12 des mittleren Bereichs 12. Der Schwanzbereich 13 weist eine variable Dicke auf, welche sich von einer maximalen Dicke d13max, welcher der Dicke d12 des mittleren Bereichs 12 entspricht, auf eine minimale Dicke d13min verringert.

Der Rechenstab 1 weist eine erste Seite 5 (in der Figur 4 links dargestellt) auf, welche bypasskanalseitig des Rechenstabs 1 angeordnet ist, und eine zweite Seite 6 (in der Figur 1 rechts dargestellt), welche triebwasserkanalseitig des Rechenstabs 1 angeordnet ist, wie in Figur 2 in der Anordnung im Triebwasserkanal W1 dargestellt.

Die zweite Seite 6 ist im Schwanzbereich 13 zum zweiten, unterwasserseitigen Ende 4 des Rechenstabs 1 hin leicht konvex gekrümmt, während die erste Seite 5 gerade ist. Die konvexe Krümmung der zweiten Seite 6 im Schwanzbereich 13 des Rechenstabs 1 resultiert in der oben erwähnten Verjüngung 13a der Dicke des Rechenstabs 1 im Schwanzbereich 13 in einer stromabwärts gerichteten Richtung F.

Der in Fig. 4 dargestellte Rechenstab 1 weist einen Grundkörper 15 auf, welcher im Kopfbereich 11 des Rechenstabs 1 einen Fortsatz 18 aufweist. Dieser ist im dargestellten Ausführungsbeispiel im Wesentlichen gewissermassen wulstförmig über die gesamte Länge l1 des Rechenstabs 1 hinweg ausgebildet.

In einer Richtung vom Schwanzbereich 13 des Rechenstabs 1 zum Kopfbereich 11 des Rechenstabs 1 hin, entlang seiner Profilängsachse P gesehen, weist der Rechenstab 1 oberwasserseitig anschliessend an einen Abschnitt von maximaler Dicke d11max einen sich über seine gesamte Länge l1 erstreckenden Hals 22 bzw. eine Verengung auf. Im Übergang von der Peripherie zum Hals 22 ist beidseitig des Halses 22 unter Bildung jeweils einer sich entlang der gesamten Länge l1 des Rechenstabs 1 erstreckender Nut 23a, 23b beidseitig jeweils ein verjüngter Abschnitt 24a, 24b angeordnet. Der Fortsatz 18 ist somit derart ausgebildet, dass im Kopfbereich 11 des Rechenstabs 1 der Grundkörper 15 an der dicksten Stelle des Kopfbereichs 11 mit der Dicke d11max beidseitig eine die Peripherie des Kopfbereichs 11 an der dicksten Stelle bildende Schulter 21a, 21b aufweist. Die jeweilige Schulter 21a, 21b geht dann in Richtung einer Mittelachse M des Querschnittes des Rechenstabs 1 unter Ausbildung der beidseitigen Nuten 23a, 23b in den Fortsatz 18 über.

Der Fortsatz 18 ist in Richtung der Profillängsachse P in Form eines Vollzylinders am Hals 22 des Grundkörpers angeformt. Die Längsachse dieses Vollzylinders erstreckt sich dabei parallel zur Längsachse L1 entlang der gesamten Länge l1 des Rechenstabs 1 und quer zur Längsachse P des Profilquerschnittes. Die Schnittebene S für den dargestellten Profilquerschnitt liegt senkrecht zur besagten Längsachse L1 des Rechenstabs 1. Der Durchmesser des Vollzylinders d18max ist hier grösser als die Breite b19 der Ausnehmung der Elektrode 16.

In den beiden Nuten 23a, 23b sind die beiden Enden 16a, 16b des geschlitzten Hohlzylinders der Elektrode 16 wie zwei Arme aufgenommen. Zwischen den beiden formschlüssig verbundenen Elementen, d.h. zwischen Grundkörper 15 und Elektrode 16, bildet sich eine Verbindungsfuge. Entlang der gesamten Grenzfläche zwischen Grundkörper 15 und Elektrode 16 ist im dargestellten Ausführungsbeispiel von Fig. 4 eine Isolationsschicht 17 angeordnet. Diese elektrische Isolationsschicht 17 ist somit in der Verbindungsfuge zwischen Grundkörper 15 und Elektrode 16 bzw. zwischen deren einander gegenüberliegenden jeweiligen Wirkflächen angeordnet und verbindet den Grundkörper 15 des Rechenstabs 1 auf stoffschlüssige Weise mit der Elektrode 16.

Es sind auch andere formschlüssige Verbindungen zwischen dem Grundkörper 15 des Rechenstabs 1 und der Elektrode 16 realisierbar.

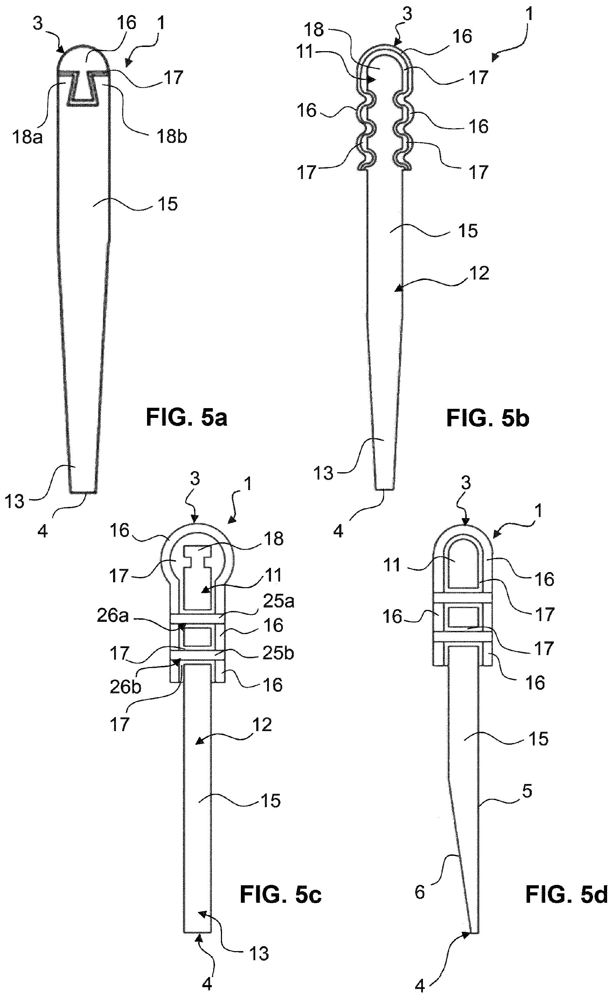

In Fig. 5a-f sind beispielsweise weitere bevorzugte Ausführungsbeispiele eines erfindungsgemässen Rechenstabs 1 im Profilquerschnitt schematisch dargestellt. In Figur 5a ist eine Schwalbenschwanzverbindung im Kopfbereich 11 zwischen Grundkörper 15 und Elektrode 16 dargestellt, wobei im Zwischenraum bzw. in der Ausnehmung 19 zwischen den beiden einander zugewandten Grenzschichten von Grundkörper 15 und Elektrode 16 eine Isolationsschicht 17 angeordnet ist, welche den Grenzflächen von Grundkörper 15 und Elektrode 16 entlang der Schwalbenschwanzform folgt. Die Isolationsschicht 17 stellt erfindungsgemäss gleichzeitig eine stoffschlüssige Verbindung zwischen Grundkörper 15 und Elektrode 16 bereit, in Form eines Klebstoffs mit elektrisch isolierender Wirkung, bzw. eines Isolationsklebers. Die Isolationsschicht 17 erstreckt sich hier somit durch die Dicke d11max des Rechenstabs im Kopfbereich 11 hindurch von der ersten Seite 5 des Rechenstabs 1 bis zur zweiten Seite 6 des Rechenstabs 1. Die Elektrode 16 bildet im Ausführungsbeispiel von Fig. 5a gewissermassen eine sich entlang der Länge l1 des Rechenstabs 1 erstreckende Kappe des Kopfbereichs 11 des Rechenstabs 1, welche keilförmig bzw. schwalbenschwanzförmig in das oberwasserseitige Ende des Grundkörpers 15 eingreift. Anstatt einer keilförmigen Verzahnung sind alternativ auch gerade Zapfen oder andere formschlüssige Eingriffsformen möglich.

In Figur 5b ist ein Rechenstab 1 mit einer Verzahnung zwischen dem Grundkörper 15 und der Elektrode 16 entlang der Peripherie des Kopfbereichs 11 des Rechenstabs 1 dargestellt. Der Grundkörper 15 weist dazu im Kopfbereich 11 diverse Aussparungen 23 auf, an welchen die Dicke des Grundkörpers 15 in Bezug zur maximalen Dicke d11max reduziert ist und in welche die Isolationsschicht 17 und die Elektrode 16 formschlüssig eingreifen können. Der Grundkörper 15 ist im Kopfbereich 11 des Rechenstabs 1 wellenartig ausgebildet. Die zwischen der Elektrode 16 und dem Grundkörper 15 des Rechenstabs 1 im Kopfbereich 11 angeordnete Isolationsschicht 17 bildet gewissermassen eine erste, innere Ummantelungsschicht des Grundkörpers 15, welche den Grundkörper 15 im Kopfbereich 11 des Rechenstabs 1 nach aussen hin, d.h. im installierten Zustand des Fischleitrechens 2 in Richtung des Wasserkörpers W, bedeckt, und die Elektrode 16 selbst bildet eine zweite, äussere Ummantelungsschicht des Grundkörpers 15 im Kopfbereich 11 des Rechenstabs 1, welche wiederum die Isolationsschicht 17 nach aussen, d.h. zum Wasserkörper W hin abdeckt. Die Verzahnung kann durch eine kraftschlüssige Verbindung, wie eine Pressverbindung ergänzt werden. Auch hier hat die Isolationsschicht 17 erfindungsgemäss eine stoffschlüssige Wirkung, d.h. die Isolationsschicht 17 ist aus einem Isolierkleber gebildet, der Formschluss bzw. die Pressverbindung kann aber durchaus aus ausreichen oder mechanische Befestigungsmittel können alternativ oder zusätzlich eingesetzt werden.

In Figur 5c ist eine weitere formschlüssige Verbindung zwischen Grundkörper 15 und Elektrode 16 dargestellt. Dabei greifen zwei in Richtung der Profillängsachse P zueinander versetzte, aber quer zur Profillängsachse P und parallel zueinander angeordnete stift- oder schraubenförmige Befestigungselemente 25a, 25b in jeweils eine Durchgangsöffnung bzw. transversale Bohrung 26a, 26b des Grundkörpers 15 im Kopfbereich 11 des Rechenstabs 1 ein. Der Fortsatz 18 ist in diesem Ausführungsbeispiel von Fig. 5c hantelförmig ausgebildet, wobei hier Projektionen der Isolationsschicht 17 in eine erste und zweite Nut des Fortsatzes 18 eingreifen. Dieses Ineinandergreifen bietet eine zusätzliche formschlüssige Verbindung zwischen der Isolationsschicht 17 und Grundkörper 15.

Im dargestellten Ausführungsbeispiel von Fig.5d weist der Grundkörper 15 im Kopfbereich 11 keinen besonderen Fortsatz 18 auf. Das kopfseitige Ende des Grundkörpers 15 ist einfach gekrümmt ausgebildet und die Isolationsschicht 17 umhüllt dieses oberwasserseitige Ende 4 des Grundkörpers 15. Die Isolationsschicht 17 wiederum wird von der Elektrode 16 umhüllt, welche, wie im Ausführungsbeispiel von Fig. 5c, mittels zwei Befestigungselementen 25a, 25b am Grundkörper 15 befestigt ist. Diese Befestigungsmittel 25a, 25b durchragen jeweils eine Durchgangsöffnung 26a, 26b des Grundkörpers 15 im Kopfbereich 11 des Rechenstabs 1 und stellen so eine formschlüssige Verbindung zwischen Grundkörper 15 und Elektrode 16 bereit.

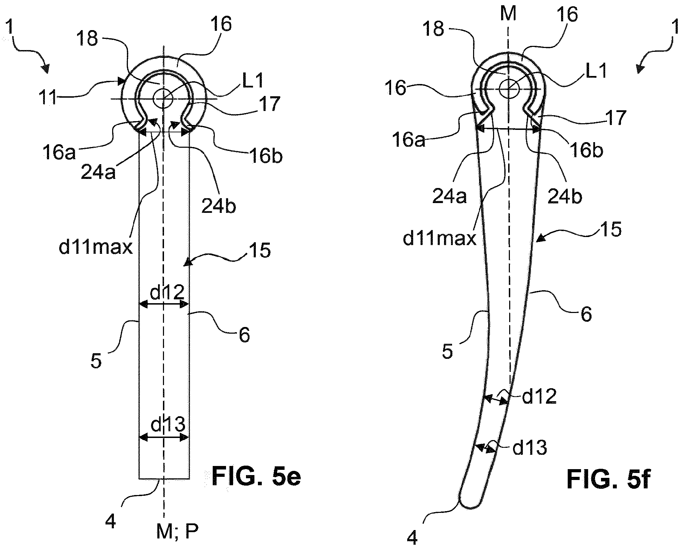

In Fig. 5e ist der Kopfbereich 11 des Rechenstabs 1 ähnlich ausgebildet wie im Ausführungsbeispiel von Fig. 4, ausser dass die Elektrode 16 an den offenen Enden seiner beiden Arme 16a, 16b nicht vollständig von der Isolationsschicht 17 umhüllt wird. Ausserdem weist der Grundkörper 15 keine Schultern 21, 22 auf, welche die offenen Enden der beiden Elektrodenarme 16a, 16b umschliessen. Der Hals des Grundkörpers 15, welcher in den oberwasserseitigen Fortsatz 18 des Grundkörpers 15 übergeht, ist in Fig. 5e breiter dargestellt als in Fig. 4. Die verjüngten Bereiche 24a, 24b sind als gekrümmte Übergangsflächen zwischen der Stelle maximalen Durchmessers d11 des Kopfbereichs 11 zum oberwasserseitigen Fortsatz 18 ausgebildet. Der oberwasserseitige Fortsatz 18, welcher gewissermassen sphärisch entlang der Längsachse L1 des Rechenstabs 1 ausgebildet ist, wird auch hier von der Elektrode 16 und der Isolationsschicht 17 umhüllt. Im dargestellten Ausführungsbeispiel weist das Profil unterhalb des Kopfbereichs einen über die gesamte restliche Länge, einschliesslich des Schwanzbereichs 13 hin eine einheitliche Dicke d12, d13 auf. Der Schwanzbereich 13 des Rechenstabs 1 ist an seiner Peripherie in diesem Ausführungsbeispiel von Fig. 5e eckig im Profilquerschnitt dargestellt. Hier sind aber auch abgerundete, gekrümmte Formen mit gleichbleibender Dicke d13 oder mit einer Verjüngung 13a denkbar.

In Fig. 5f ist in Bezug auf den Kopfbereich 11 gewissermassen eine Zwischenform zwischen dem Ausführungsbeispiel von Fig. 4 und dem Ausführungsbeispiel von Fig. 5e dargestellt. Der oberwasserseitige Fortsatz 18 des Grundkörpers 15 ist wie in Fig. 5e ebenfalls im Wesentlichen sphärisch ausgebildet. Die beiden Arme 16a, 16b der Elektrode 16, welche den sphärischen Fortsatz 18 umhüllen, werden hier zwar an ihren freien Enden von der Isolationsschicht 17 umhüllt, der Grundkörper 15 weist aber im Kopfbereich 11 keine Schultern 21, 22 auf. Der erste und zweite verjüngte Bereich 24a, 24b des Kopfbereichs 11 beginnt direkt an der Peripherie des Grundkörpers 15 und nicht wie in Fig. 4 erst radial innen von der ersten resp. zweiten Schulter 21, 22. Somit erstreckt sich in der Ausführungsform von Fig. 5f die Isolationsschicht 17 auch jeweils über einen längeren Abschnitt der ersten resp. zweiten Seite 5, 6 an der Peripherie des Profilquerschnitts des Rechenstabs 1 als im Ausführungsbeispiel von Fig. 4, entlang der Profilquerschnittlängsachse P gesehen, und hat somit im bestimmungsmässigen Gebrauch auch mehr Wasserkontaktfläche. Der Mittelbereich 12, welcher sich hier bis zum Übergang in den Schwanzbereich 13 im Wesentlichen entlang der Profilquerschnittslängsachse P erstreckt, ist im Ausführungsbeispiel von Fig. 5f mit abnehmender Dicke bzw. verjüngt zum Schwanzbereich 13 hin ausgebildet. Der Schwanzbereich 13 ist in Bezug auf die Profilquerschnittslängsachse P und somit hier auch in Bezug auf den Mittelbereich 12 abgewinkelt bzw. gekrümmt ausgebildet, und erstreckt sich mit einer im Wesentlichen konstanten Dicke d13 bis zu einem abgerundeten unterwasserseitigen Ende 4 des Rechenstabs 1.

Allen dargestellten Ausführungsbeispielen ist gemeinsam, dass der Grundkörper 15 des Rechenstabs 1 formschlüssig mit einer Elektrode 16 verbunden ist. Diese formschlüssige Verbindung zwischen Grundkörper 15 und Elektrode 16 erfolgt über die korrespondierende Formgebung des Grundkörpers 15 und der Elektrode 16 im Kopfbereich und indirekt via eine Isolationsschicht 17. Der Formschluss kann zusätzlich oder alternativ über mechanische Befestigungsmittel 25a, 25b, wie beispielsweise Stifte oder Schrauben realisiert werden. In den in den Figuren 4, und 5a-5d dargestellten Ausführungsbeispielen ist dies jeweils derart realisiert, dass die Isolationsschicht 17 den Grundkörper 15 des Rechenstabs 1 im Kopfbereich 11 bedeckt bzw. umhüllt und mit einer Elektrode 16 verbindet, welche wiederum die Isolationsschicht 17 umhüllt bzw. an/auf der Isolationsschicht 17 befestigt ist. Die Elektrode 16 bildet in sämtlichen dargestellten Ausführungsbeispielen gewissermassen das kopfseitige Ende des Rechenstabs 1.

Jede im Rahmen dieser Erfindung dargestellte Form des Kopfbereichs 11 eines Rechenstabs 1 ist mit jeder beliebigen dargestellten Form des Mittelbereichs 12 und/oder des Schwanzbereichs 13 kombinierbar und umgekehrt.

### BEZUGSZEICHENLISTE

| | | | |
|---|---|---|---|
| 1 | Rechenstab | 23a | erste Nut, Aussparung in 11 |
| 2 | Fischleitrechen | 23b | zweite Nut, Aussparung in 11 |
| 2a | erstes, triebwasserkanalseitiges Ende von 2 | 24a | erster verjüngter Bereich von 11 |
| | | 24b | zweiter verjüngter Bereich von 11 |
| 2b | zweites, bypasskanalseitiges Ende von 2 | | |
| | | 25a | erstes Verbindungsmittel |
| 3 | erstes, oberwasserseitiges Ende von 1 | 25b | zweites Verbindungsmittel |
| | | 26a | erste Durchgangsöffnung |
| 4 | zweites, unterwasserseitiges Ende von 1 | 26b | zweite Durchgangsöffnung |
| | | b19 | Breite von 19 |
| 5 | erste Seite von 1 | d11max | maximale Dicke von 11 |
| 6 | zweite Seite von 1 | d12 | Dicke von 12 |
| 7 | Fisch | d13 | Dicke von 13 |
| 8 | erste Grenzstruktur | d18max | maximale Dicke von 18 |
| 9 | zweite Grenzstruktur | d13min | minimale Dicke von 13 |
| 10 | dritte, mittlere Grenzstruktur | d13max | maximale Dicke von 13 |
| 11 | Kopfbereich von 1 | d15max | maximale Dicke von 15 |
| 12 | Mittelbereich von 1 | d17 | Dicke von 17 |
| 13 | Schwanzbereich von 1 | D16a | Aussendurchmesser von 16 |
| 13a | Verjüngung in 13 | E | elektrisches Feld |
| 14 | Schwenktor | E1 | erste vertikale Ebene |
| 15 | Grundkörper von 1 | E2 | zweite vertikale Ebene |
| 16 | Elektrode | L1 | Längsachse von 1 |
| 16a | erstes Ende von 16 | L2 | Längsachse von 2 |
| 16b | zweites Ende von 16 | L16 | Längsachse von 16 |
| 17 | Isolationsschicht | M | Mittelachse von 1 |
| 18 | oberwasserseitiger Fortsatz von 15 | P | Längsachse des Profilquerschnittes von 1 |
| 19 | Ausnehmung in 16 | S | Schnittebene von 1 |
| 20 | Hals | W | Wasserkörper |
| 21 | erste Schulter | W1 | Triebwasserkanal |
| 22 | zweite Schulter | W2 | Bypasskanal |

## Patentansprüche

1. Rechenstab (1) für einen Fischleitrechen (2), aufweisend einen Grundkörper (15), einen oberwasserseitigen Kopfbereich (11), einen stromabwärts vom Kopfbereich (11) angeordneten Mittelbereich (12) und einen stromabwärts vom Mittelbereich (12) angeordneten Schwanzbereich (13), wobei am oberwasserseitigen Ende (3) des Kopfbereichs (11) des Rechenstabs (1) eine Elektrode (16) angeordnet ist, welche eine Isolationsschicht (17) aufweist, wobei die Isolationsschicht (17) die Elektrode (16) vom Grundkörper (15) des Rechenstabs (1) elektrisch isoliert, wobei die Elektrode (16) formschlüssig mit dem Grundkörper (15) des Rechenstabs (1) verbunden ist, **dadurch gekennzeichnet, dass** die Isolationsschicht (17) gleichzeitig ein elektrisch isolierender Klebstoff ist, welcher die Elektrode (16) mindestens bereichsweise stoffschlüssig mit dem Grundkörper (15) des Rechenstabs (1) verbindet.

2. Rechenstab (1) gemäss Anspruch 1, **dadurch gekennzeichnet, dass** die Elektrode (16), mindestens bereichsweise, das oberwasserseitige Ende (3) des Kopfbereichs (11) des Rechenstabs (1) bildet.

3. Rechenstab (1) nach Anspruch 1 oder 2, **dadurch gekennzeichnet, dass** der Klebstoff UV-beständig ist.

4. Rechenstab (1) nach einem der vorhergehenden Ansprüche, **dadurch gekennzeichnet, dass** der Klebstoff vollständig aushärtbar oder elastisch verformbar ist.

5. Rechenstab (1) nach einem der vorhergehenden Ansprüche, **dadurch gekennzeichnet, dass** die Isolationsschicht (17) eine Dicke (d17) im Bereich von 0.5 bis 3 mm aufweist.

6. Rechenstab (1) nach einem der vorhergehenden Ansprüche, **dadurch gekennzeichnet, dass** die Elektrode (16) in Form eines geschlitzten Hohlzylinders mit einer Länge und einer Längsachse (L16) ausgebildet ist, wobei der Hohlzylinder entlang der Längsachse (L16) über die gesamte Länge der Elektrode (16) hinweg mindestens eine Ausnehmung (19) aufweist.

7. Rechenstab (1) nach einem der vorhergehenden Ansprüche, **dadurch gekennzeichnet, dass** die Elektrode (16) im Kopfbereich (11) des Rechenstabs (1) formschlüssig an mindestens einem Fortsatz (18) des Grundkörpers (15) befestigt ist, vorzugsweise an mindestens einem oberwasserseitigen oder peripheren Fortsatz (18) des Grundkörpers (15), wobei die Elektrode (16) den mindestens einen Fortsatz (18) vorzugsweise umschliesst.

8. Rechenstab nach Anspruch 7, **dadurch gekennzeichnet, dass** eine quer zur Längsachse (L16) der Elektrode (16) gemessene Breite (b19) der mindestens einen Ausnehmung (19) der Elektrode (16) kleiner ist als ein maximaler Durchmesser (d18max) des oberwasserseitigen Fortsatzes (18) des Grundkörpers (15).

9. Rechenstab (1) nach einem der vorhergehenden Ansprüche, **dadurch gekennzeichnet, dass** der Kopfbereich (11) des Grundkörpers (15) des Rechenstabs (1) eine maximale erste Dicke (d11max) aufweist, wobei der Mittelbereich (12) eine zweite Dicke (d12) aufweist, welche kleiner ist als die maximale erste Dicke (d11max) des Kopfbereichs (11), und wobei der Schwanzbereich (13) eine Verjüngung (13a), beginnend von einer maximalen Dicke (d13max), welche der zweiten Dicke (d12) des Mittelbereichs (12) entspricht, bis auf eine minimale Dicke (d13min) aufweist.

10. Rechenstab (1) nach einem der vorhergehenden Ansprüche, **dadurch gekennzeichnet, dass** der Grundkörper (15) des Rechenstabs (1) aus einem gewalzten Stahlprofil gebildet ist, vorzugsweise aus Stahl S355.

11. Rechenstab (1) nach einem der vorhergehenden Ansprüche, **dadurch gekennzeichnet, dass** der Rechenstab (1) über die Elektrode aufheizbar ausgebildet ist.

12. Rechenstab (1) nach einem der vorhergehenden Ansprüche, **dadurch gekennzeichnet, dass** der Rechenstab (1) in einem Querschnitt entlang einer Querschnittsebene (S) eine Profilform aufweist, welche ausgewählt ist aus fischbauchförmig, stromlinienförmig, oder tränenförmig.

13. Rechenstab (1) nach einem der vorhergehenden Ansprüche, **dadurch gekennzeichnet, dass** die Elektrode (16) steuerbar ausgebildet ist, sodass die Elektrode (16) nach Bedarf ein- und ausgeschaltet werden kann, wobei vorzugsweise eine Stärke des von der Elektrode (16) ausgehenden elektrischen Felds (E) des Rechenstabs (1) nach Bedarf einstellbar ist.

14. Fischleitrechen (2), aufweisend eine Vielzahl von Rechenstäben (1) gemäss einem der vorhergehenden Ansprüche.

15. Fischleitrechen (2) gemäss Anspruch 14, wobei in einem bypasskanalseitigen Abschnitt des Fischleitrechens (2) die Rechenstäbe (1) jeweils derart mit einem elektrischen Feld (E) beaufschlagt sind, sodass das elektrische Feld (E) der im bypasskanalseitigen Abschnitt angeordneten Rechenstäbe (1) zum Bypasskanal (W2) hin kontinuierlich abnehmend eingestellt ist.

## Claims

1. Rake bar (1) for a fish guidance rake (2), comprising a base body (15), a head-water-side head region (11), a middle region (12) arranged downstream of the head region (11), and a tail region (13) arranged downstream of the middle region (12), wherein an electrode (16) is arranged at the upstream end (3) of the head region (11) of the rake bar (1), which electrode comprises an insulating layer (17), wherein the insulating layer (17) electrically insulates the electrode (16) from the base body (15) of the rake bar (1), wherein the electrode (16) is connected to the base body (15) of the rake bar (1) in a form-fitting manner, **characterized in that** the insulating layer (17) is simultaneously an electrically insulating adhesive which connects the electrode (16) to the base body (15) of the rake bar (1) in a material-fitting manner at least in some areas.

2. Rake bar (1) according to claim 1, **characterized in that** the electrode (16) forms, at least in some areas, the head-water-side end (3) of the head region (11) of the rake bar (1).

3. Rake bar (1) according to claim 1 or 2, **characterized in that** the adhesive is UV-resistant.

4. Rake bar (1) according to one of the preceding claims, **characterized in that** the adhesive is completely curable or elastically deformable.

5. Rake bar (1) according to one of the preceding claims, **characterized in that** the insulation layer (17) comprises a thickness (d17) in the range of 0.5 to 3 mm.

6. Rake bar (1) according to one of the preceding claims, **characterized in that** the electrode (16) is designed in the form of a slotted hollow cylinder with a length and a longitudinal axis (L16), wherein the hollow cylinder comprises along the longitudinal axis (L16) at least one recess (19) extending over the entire length of the electrode (16).

7. Rake bar (1) according to one of the preceding claims, **characterized in that** the electrode (16) is fixed in a form-fitting manner in the head region (11) of the rake bar (1), preferably to at least one head-water-side extension or peripheral extension (18) of the base body (15), wherein the electrode (16) preferably encloses the at least one extension (18).

8. Rake bar according to claim 7, **characterized in that** a width (b19) of the at least one recess (19) of the electrode (16), measured transversely to the longitudinal axis (L16) of the electrode (16), is smaller than a maximum diameter (d18max) of the head-water-side extension (18) of the base body (15).

9. Rake bar (1) according to one of the preceding claims, **characterized in that** the head region (11) of the base body (15) of the rake bar (1) comprises a maximum first thickness (d11max), wherein the middle region (12) comprises a second thickness (d12) which is smaller than the maximum first thickness (d11max) of the head region (11), and wherein the tail region (13) comprises a taper (13a) starting from a maximum thickness (d13max) corresponding to the second thickness (d12) of the middle region (12) down to a minimum thickness (d13min).

10. Rake bar (1) according to one of the preceding claims, **characterized in that** the base body (15) of the rake bar (1) is formed from a rolled steel profile, preferably from S355 steel.

11. Rake bar (1) according to one of the preceding claims, **characterized in that** the rake bar (1) is designed to be heated via the electrode.

12. Rake bar (1) according to one of the preceding claims, **characterized in that** the rake bar (1) comprises a profile shape in a cross-section along a cross-sectional plane (S) which is selected from fish-belly-shaped, streamlined, or teardrop-shaped.

13. Rake bar (1) according to one of the preceding claims, **characterized in that** the electrode (16) is designed to be controllable so that the electrode (16) can be switched on and off as required, wherein preferably the strength of the electric field (E) of the rake bar (1) emanating from the electrode (16) can be adjusted as required.

14. Fish guide rake (2) comprising a plurality of rake bars (1) according to one of the preceding claims.

15. Fish guidance rake (2) according to claim 14, wherein in a bypass-channel-side section of the fish guidance rake (2), the rake bars (1) are each subjected to an electric field (E) such that the electric field (E) of the rake bars (1) arranged in the bypass-channel-side section is set to decrease continuously toward the bypass channel (W2).

## Revendications

1. Barre de dégrillage (1) pour un râteau guide-poissons (2), possédant un corps de base (15), une zone de tête (11) située du côté amont, une zone centrale (12) située en aval de la zone de tête (11) et une zone de queue (13) située en aval de la zone centrale (12), une électrode (16) étant disposée au niveau de l'extrémité côté amont (3) de la zone de tête (11) de la barre de dégrillage (1), laquelle possède une couche isolante (17), la couche isolante (17) isolant électriquement l'électrode (16) du corps de base (15) de la barre de dégrillage (1), l'électrode (16) étant reliée par complémentarité de forme au corps de base (15) de la barre de dégrillage (1), **caractérisée en ce que** la couche isolante (17) est en même temps une colle électriquement isolante, laquelle relie l'électrode (16) au corps de base (15) de la barre de dégrillage (1) par liaison de matières, au moins dans certaines zones.

2. Barre de dégrillage (1) selon la revendication 1, **caractérisée en ce que** l'électrode (16) forme, au moins dans certaines zones, l'extrémité côté amont (3) de la zone de tête (11) de la barre de dégrillage (1).

3. Barre de dégrillage (1) selon la revendication 1 ou 2, **caractérisée en ce que** la colle est résistante aux UV.

4. Barre de dégrillage (1) selon l'une des revendications précédentes, **caractérisée en ce que** la colle est complètement durcissable ou élastiquement déformable.

5. Barre de dégrillage (1) selon l'une des revendications précédentes, **caractérisée en ce que** la couche isolante (17) présente une épaisseur (d17) dans la plage de 0,5 à 3 mm.

6. Barre de dégrillage (1) selon l'une des revendications précédentes, **caractérisée en ce que** l'électrode (16) est réalisée sous la forme d'un cylindre creux fendu ayant une longueur et un axe longitudinal (L16), le cylindre creux possédant au moins un évidement (19) le long de l'axe longitudinal (L16) sur toute la longueur de l'électrode (16).

7. Barre de dégrillage (1) selon l'une des revendications précédentes, **caractérisée en ce que** l'électrode (16) est fixée dans la zone de tête (11) de la barre de dégrillage (1) par complémentarité de forme à au moins un prolongement (15) du corps de base (16), de préférence à au moins un prolongement (18) situé du côté amont ou périphérique du corps de base (18), l'électrode (15) entourant de préférence l'au moins un prolongement (18).

8. Barre de dégrillage selon la revendication 7, **caractérisée en ce qu'**une largeur (b19) de l'au moins un évidement (19) de l'électrode (16), mesurée transversalement à l'axe longitudinal (L16) de l'électrode (16), est inférieure à un diamètre maximal (d18max) du prolongement (18) du corps de base (15) situé du côté amont.

9. Barre de dégrillage (1) selon l'une des revendications précédentes, **caractérisée en ce que** la zone de tête (11) du corps de base (15) de la barre de dégrillage (1) présente une première épaisseur maximale (d11max), la zone centrale (12) présentant une deuxième épaisseur (d12), laquelle est inférieure à la première épaisseur maximale (d11max) de la zone de tête (11), et la zone de queue (13) présentant un rétrécissement (13a) qui commence à partir d'une épaisseur maximale (d13max), laquelle correspond à la deuxième épaisseur (d12) de la zone centrale (12), jusqu'à une épaisseur minimale (d13min).

10. Barre de dégrillage (1) selon l'une des revendications précédentes, **caractérisée en ce que** le corps de base (15) de la barre de dégrillage (1) est formé d'un profilé en acier laminé, de préférence en acier S355.

11. Barre de dégrillage (1) selon l'une des revendications précédentes, **caractérisée en ce que** la barre de dégrillage (1) est configurée de manière à pouvoir être chauffée par le biais de l'électrode.

12. Barre de dégrillage (1) selon l'une des revendications précédentes, **caractérisée en ce que** la barre de dégrillage (1) présente, dans une coupe transversale le long d'un plan de coupe transversale (S), une forme de profilé qui est choisie parmi une forme de ventre de poisson, une forme de ligne de courant ou une forme de larme.

13. Barre de dégrillage (1) selon l'une des revendications précédentes, **caractérisée en ce que** l'électrode (16) est réalisée de manière à pouvoir être commandée, de telle sorte que l'électrode (16) peut être mise en circuit et hors circuit selon les besoins, une intensité du champ électrique (E) de la barre de dégrillage (1) provenant de l'électrode (16) pouvant de préférence être réglée selon les besoins.

14. Râteau guide-poissons (2), possédant une pluralité de barres de dégrillage (1) selon l'une des revendications précédentes.

15. Râteau guide-poissons (2) selon la revendication 14, **caractérisé en ce que** dans une portion côté canal de dérivation du râteau guide-poissons (2), les barres de dégrillage (1) sont respectivement soumises à un champ électrique (E) de telle sorte que le champ électrique (E) des barres de dégrillage (1) disposées dans la portion côté canal de dérivation est réglé pour diminuer de manière continue en direction du canal de dérivation (W2).
